# EUROPEAN PATENT SPECIFICATION

(11) **EP 3 086 535 B1**
(45) Date of publication and mention of the grant of the patent: **16.10.2019**
(21) Application number: 16150085.5
(22) Date of filing: 04.01.2016
(51) Int. Cl.: H04B 1/3827, H04M 1/02, G06F 1/16

(54) **MOBILE DEVICE WITH AN INCREASED DISPLAY SIZE**
MOBILE VORRICHTUNG MIT VERGRÖSSERTER ANZEIGE
DISPOSITIF MOBILE AVEC UN ÉCRAN AGRANDIT

(30) Priority: 21.04.2015 CN 201510191850
(43) Date of publication of application: 26.10.2016
(73) Proprietor: Xiaomi Inc., Beijing 100085 (CN)
(72) Inventor: AI, Lixin, Haidian District Beijing 100085 (CN); YAN, Kesheng, Haidian District Beijing 100085 (CN); LI, Jinchao, Haidian District Beijing 100085 (CN); HU, Shaoxing, Haidian District Beijing 100085 (CN)
(74) Representative: Loustalan, Paul William

(56) References cited:
- EP-A1- 2 640 040
- EP-A1- 2 819 385
- US-A1- 2012 050 988
- US-A1- 2012 250 276
- US-A1- 2015 043 141

## Description

### TECHNICAL FIELD

The present disclosure relates to the technical field of terminals, and more particularly, to a mobile device.

### BACKGROUND

As the screen size of the mobile device increases, the mobile device has to have an increasing size itself. The screen with an increased size may help to provide a better visual effect for a user, however, the mobile device with an increased size may cause negative effects in the aspects of portability, gripping and etc., and may affect the user's experiences.

US 2012/0250276 A1 describes an electronic apparatus having a housing, a frame, a display module and a printed circuitry board. The frame is contained in the housing and is provided with a bumper portion which protrudes from the housing for protecting the apparatus.

US 2012/0050988 A1 describes a display assembly which includes at least a protective layer, a display stack that includes a plurality of display components arranged in a plurality of interconnected layers, and a flat support chassis arranged to provide support for the display stack.

EP 2 819 385 A1 describes an electronic device which includes a substrate assembly comprising a first area and a frame at a periphery of the first area and a lens, which is configured to be affixed to the first area, and which comprises a second area and a curved area at a periphery of the second area. The curved area is separated from the frame by a gap and is configured to reflect light across the gap to hide the gap from an observer looking into the gap.

EP 2 640 040 A1 describes a display module including a LCD panel, a backlight, a backlight unit having a light guide plate and a light source, a mold located at a perimeter of the LCD panel and a perimeter of the backlight unit, and a light cutoff part configured to curt off path of light incident on a front of the LCD panel.

US 2015/0043141 A1 provides a mobile device comprising a plate; the plate being adapted to accommodate a printed circuit board; a ring bonded to the plate; a seal disposed between the ring and the plate, the plate and ring and seal forming a mid-plate structure; wherein the seal comprises a platform; and a housing unit bonded to the platform.

### SUMMARY

In the present disclosure, a mobile device is provided so as to remedy the defects in the relevant art.

According to a first aspect of embodiments of the present disclosure, there is provided a mobile device, comprising:
an intermediate frame structure, comprising a side edge frame forming a side edge of the mobile device, the intermediate frame structure comprising a horizontal baffle that has a rim being connected to an interior wall of the side edge frame; and
a screen module, having side edges sized to fit the size of the interior walls of the side edge frame, a bottom surface of the screen module being connected to an upper surface of the horizontal baffle when the screen module is assembled with the intermediate frame structure, and each of the side edges of the screen module being attached to a corresponding interior wall of the side edge frame.

The screen module comprises:
a glass panel, having side edges that are attached to the interior walls of the side edge frame, and an upper rim of a side edge of the glass panel is connected to an upper rim of an interior wall of the side edge frame.

The screen module further comprises:
a LCD display module, adhered to the bottom surface of the glass panel;
a LCD holder, enclosing a side edge and a bottom surface of the LCD display module, an interior surface of the LCD holder is fitted to an exterior surface of the LCD display module, and an exterior surface of the LCD holder is fitted to the interior walls of the side edge frame and the upper surface of the horizontal baffle; a side edge of the LCD holder is attached to the interior wall of the side edge frame, and a bottom surface of the LCD holder is connected with the upper surface of the horizontal baffle when the screen module is assembled with the intermediated frame structure.

Optionally, the LCD holder is connected to the upper surface of the horizontal baffle by means of adhesive, snap or melt connection.

Optionally, the LCD display module forms a corresponding active area on a central region of the bottom surface of the glass panel; and a left side edge region and a right side edge region are formed between a left rim and a right rim of the active area and a left rim and a right rim of the bottom surface, respectively, and a silk-screen strip in the LCD display module is adhered into the left edge region and right side edge region.

Optionally, portions of the surface of the glass panel corresponding to the left side edge region and right side edge region have an arced shape, such that the emergent beam from the active area is reflected into the left side edge region and right side edge region.

Optionally, the intermediate frame structure is raised outwards.

Optionally, the raised portion of the intermediate frame structure forms a surface in the vertical direction, and a slope or camber is formed between a rim of the surface and a exterior rim of the top surface of the side edge frame.

As used herein, the terms "horizontal" and "vertical" refer to the relative directions of the described features when the mobile device is oriented such that the screen is in a plane where the normal to the plane is vertical.

The technical solutions provided by the embodiments according to the present disclosure have the following advantages:
As known from the above embodiments, the adhesive layer formed between side surface of the screen module and the intermediate frame structure is eliminated by adhering the bottom surface of the screen module to the intermediate frame structure, allowing enlarge the space that can be occupied by the screen module without varying the size of the intermediate frame structure, so as to increase the screen occupying proportion of the mobile device which would help to improve the user's experience.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a structural illustrative view of a mobile device according to the relevant art;
Fig. 2 is a structural illustrative view of an embodiment of a mobile device according to the present disclosure;
Fig. 3 is a structural illustrative view of another embodiment of a mobile device according to the present disclosure;
Fig. 4 is a structural illustrative view of still another embodiment of a mobile device according to the present disclosure;
Fig. 5 is a structural illustrative view of an example of a mobile device;
Fig. 6 is a structural illustrative view of still another embodiment of a mobile device according to the present disclosure; and
Fig. 7 is a structural illustrative view of still another embodiment of a mobile device according to the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

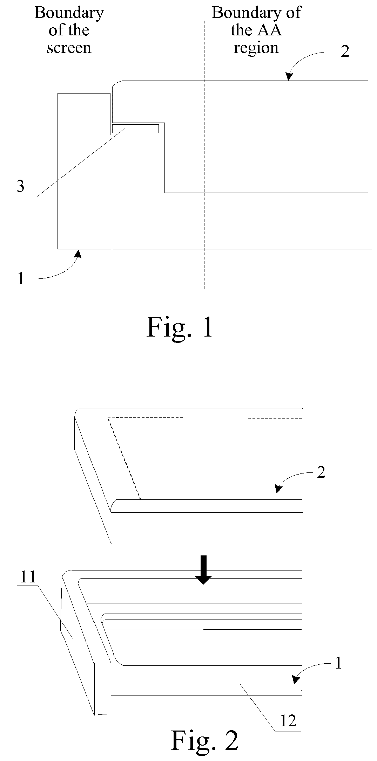

Fig. 1 is a structural illustrative view of a mobile device according to the relevant art. As shown in Fig. 1, when an intermediate frame structure 1 in the prior art is assembled with a screen module 2, a stepped structure is formed on the internal side of the intermediate frame structure 1. The stepped structure is fitted with a raised structure on the rim of the screen module 2, and an adhesive layer 3 is formed between the upper surface of the stepped structure and the lower surface of the raised structure such that the both are secured. However, due to the raised structure on the rim of the screen module 2, there may be a large width between the boundaries of the AA area (Active Area) and the screen, decreasing the screen occupying proportion relatively.

Therefore, the technical problems in the prior art are solved by the improved structure according to the present disclosure.

Fig. 2 is a structural illustrative view of an embodiment of a mobile device according to the present disclosure. As shown in Fig. 2, the mobile device may comprise:
an intermediate frame structure 1, comprising a side edge frame 11 forming the side edges of the mobile device, the intermediate frame structure 1 comprising a horizontal baffle 12 that has a rim connecting with the interior wall of the side edge frame 11 in its side; and
a screen module 2, having side edges sized to fit the size of the interior wall of the side edge frame 11.

In this embodiment, those skilled in the art should appreciate: since the mobile device has a thickness much less than its length and width, the upper, lower, left and right side walls with respect to the thickness may be referred as "side edges", so as to show the area differences between the side walls and the front and back surfaces.

### 1. The constitution of the screen module 2:

### 1) Glass panel 21

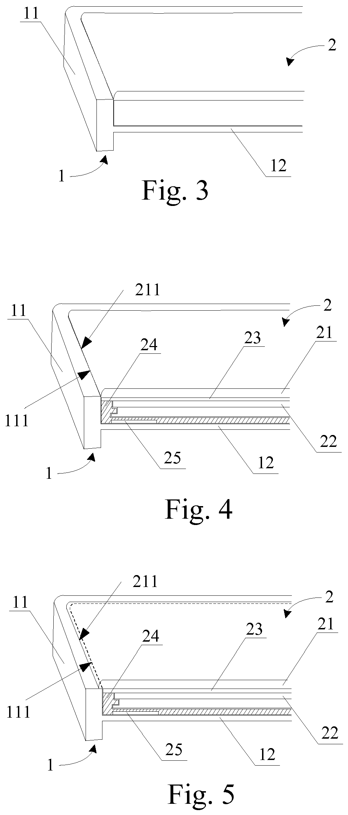

Figs. 4-5 are structural illustrative views of still another embodiment of a mobile device according to the present disclosure. As shown in Figs. 4-5, the screen module 2 may comprise: a glass panel 21.

In an exemplary embodiment, as shown in Fig 4, the side edges of the glass panel 21 is attached to the interior walls of the side edge frame 11. Only side edges and interior walls in the left and upper are shown in Fig. 4. Taking the left side edge and interior wall as an example, the upper rim 211 of the side edge of the glass panel 21 is connected to the upper rim 111 of the interior edge of the frame 11. Certainly, the structural position of connected upper rims may be presented between other side edges and corresponding interior walls.

In another exemplary embodiment, as shown in Fig. 5, the bottom surface of the glass panel 21 is in the same level with the top surface of the side edge frame 11, and the bottom surface rim of the glass panel 21 is extended towards the side edge frame 11, such that vertical projection region of the bottom surface of the glass panel 21 covers the vertical projection of the upper rim 111 of the interior wall of the side edge frame 11. In other words, the upper rim 211 of the side edge of the glass panel 21 is positioned outside the upper rim 111 of the interior wall of the side edge frame 11, such that the gap between the intermediate frame structure 1 and the screen module 2 is shielded by the glass panel 21, so as to prevent the dust from falling into the gap and help improving the appearance of the mobile device.

### 2) LCD display module 22

The screen module 2 may also comprise a LCD display module 22 which is adhered to the bottom surface of the glass panel 21 by, for example, an adhesive tape such as an optical adhesive tape, or by glue, forming the transparent adhesive layer 23 as shown in Figs. 4-5.

In an exemplary embodiment, the LCD display module 22 is usually sized smaller than the glass panel 21, such that the LCD display module 22 is adhered on the central region of the bottom surface of the glass panel 21. Thus, if the upper rim 211 of the side edge of the glass panel 21 is connected with the upper rim 111 of the interior wall of the side frame 11 when the screen module 2 is assembled with intermediate frame structure 1, there will be a corresponding gap between the LCD display module 22 and the interior wall of the side frame 11.

Therefore, in this embodiment, the screen module 2 may also comprise a LCD holder 24 as shown in Figs. 4-5, for enclosing the side edges and bottom surface of the LCD display module 22. The interior surface of the LCD holder 24 is fitted with the exterior surface of the LCD display module 22, and the exterior surface of the LCD holder 24 is fitted with the interior wall of the side frame 11 and the upper surface of the horizontal baffle 12, such that the gap among the side frame 11, the horizontal baffle 12 and the LCD display module 22 is filled. Wherein the side edges of the LCD holder 24 is attached with the interior walls of the side frame 11, and the bottom surface of the LCD holder 24 is connected with the upper surface of the horizontal baffle 12 when the screen module 2 is assembled with the intermediate frame structure 1. The LCD holder 24 may be connected to the upper surface of the horizontal baffle 12 by means of adhesive, snap, melt connection, or etc., forming, for example, an adhesive layer 25 when using adhesive connection.

In another exemplary embodiment, other than the structure shown in Figs. 4-5, the LCD display module 22 may be fitted to the side frame 11 and horizontal baffle 12 of the intermediate frame structure 2, so as to omit the LCD holder 24 from the screen module 2.

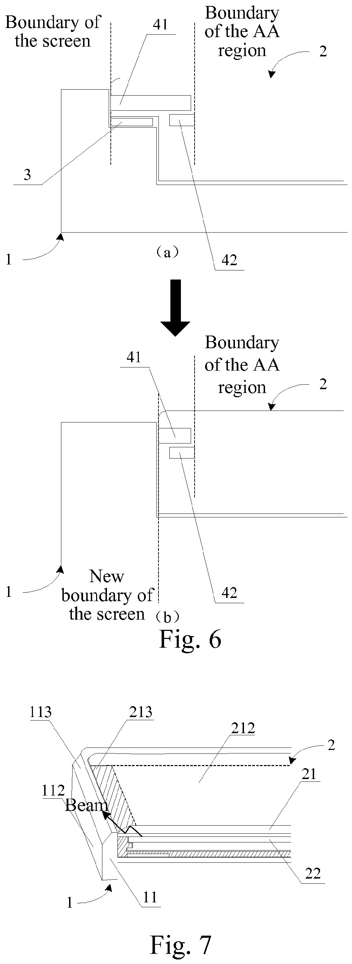

In Fig. 6, a comparison is shown between the cross-section of the mobile device in the relative art (i.e., Fig. 6(a)) and that of the mobile device according to the present disclosure (i.e., Fig. 6(b)). In Fig. 6(a), the raised structure formed by the screen module 2 is merely partial region of the silk-screen strip 41 and the rim of the glass panel 21, and the LCD display module 22 is positioned within the body of the screen module 2 and is independent to the raised structure.

Therefore, according to the present disclosure, the raised structure of the screen module 2 in Fig. 6(a) and the stepped structure of the intermediate frame structure 1 are removed, such that, in the screen module 2 shown by Fig. 6(b), the width of the silk-screen strip 41 is shortened accordingly. Furthermore, by forming a new screen boundary, the distance between the boundary of the AA region and the new boundary of the screen is substantially shorter than the distance between the boundary of the AA region and that of the screen as shown in Fig. 6(a), without affecting the display function of the LCD display module 22.

In other words, according to the present disclosure, the widths of the silk-screen strip 41 and the glass panel 21 are decreased without varying the area of the AA region, such that the total area of the front surface of the mobile device is decreased, so as to relatively increase the screen occupying proportion corresponding to the AA region, and the appearance of the mobile device is thus improved.

### 2. Shape of the glass panel 21

In the technical solutions of the present disclosure, the rim of the glass panel 21 may be any form. For example, in an exemplary embodiment as shown in Figs. 2-4, only the upper rim 211 of the side edge of the glass panel 21 is chamfered to avoid cutting the user.

As shown in Fig. 7, in another exemplary embodiment, an active area 212 corresponding to the LCD display module 22 is formed on the central region of the bottom surface of the glass panel 21. Wherein a left side edge region 213 and a right side edge region 213 (only the left region is shown in Fig. 7 as an example) is formed between the left rim and the right rim of the active area 212 and the left rim and the right rim of the bottom surface, respectively. Further, the silk-screen strip (not shown in the figures) in the LCD display module 22 is adhered into the left side edge region 213 and the right side edge region 213.

Furthermore, portions of the surface of the glass panel 21 corresponding to the left side edge 213 and the right side edge 213 may have an arced shape, such that the emergent beam from the active area 212 may be reflected to the left side edge region 213 and the right side edge region 213. In this embodiment, since the silk-screen strip or etc. is spread at the left side edge region 213 and the right side edge region 213, a black (or other color) narrow edge will exist at the rim of the glass panel 21. However, the emergent beam of the active area 212 may present reflection and refraction by adjusting the arced angle of the surface at the left side edge region 213 and the right side edge region 213 of the glass panel 21, so as to impair the visual difference between the black narrow edge and the display of the active area 212, such that the existence of the black narrow edge is faded visually.

### 3. The structure of the intermediate frame structure 1

As shown in Figs. 1-4, in an exemplary embodiment, the exterior surface of the intermediate frame structure 1 may be a vertical side wall. However, as shown in Fig. 7, in another exemplary embodiment, the intermediate frame structure 1 of the mobile device may be raised outwards in the left and right sides and the up and down sides (only the left direction is shown in Fig. 7 as an example) respectively.

The intermediate frame structure 1 may be strengthened by being raised outwards, allowing the mobile device to withstand relevant impacts or pressures when being dropped or pressed, lowering the damage to the mobile device. As shown in for example Fig. 7, in an exemplary embodiment, the raised portion of the intermediate frame structure 1 may form a surface 112 in the vertical direction, and a matching slope 113 or camber is formed between the rim of the surface 112 and the outer rim of the top surface of the side frame 11.

As known from the above embodiments, according to the present disclosure, the adhesive layer 3 formed between side surface of the screen module 2 and the intermediate frame structure 1 is eliminated by adhering the bottom surface of the screen module 2 to the intermediate frame structure 1, allowing enlarge the space that can be occupied by the screen module 2 without varying the size of the intermediate frame structure 1, so as to increase the screen occupying proportion of the mobile device which would help to improve the user's experience.

## Claims

1. A mobile device comprising:
an intermediate frame structure (1) having a side edge frame (11) forming a side edge of the mobile device, the intermediate frame structure (1) further comprising a horizontal baffle (12) that has a rim being connected to an interior wall of the side edge frame (11); the mobile device further comprising:
a screen module (2) having side edges sized to fit the size of the interior walls of the side edge frame (11), a bottom surface of the screen module (2) being connected to an upper surface of the horizontal baffle (12) when the screen module (2) is assembled with the intermediate frame structure (1), and each of the side edges of the screen module (2) being attached to a corresponding interior wall of the side edge frame (11),
wherein the screen module (2) comprises:
a glass panel (21) having side edges that are attached to the interior walls of the side edge frame (11), and an upper rim (211) of a side edge of the glass panel (21) is connected to an upper rim (111) of an interior wall of the side edge frame (11);
a LCD display module (22) adhered to the bottom surface of the glass panel (21); and
a LCD holder (24) enclosing a side edge and a bottom surface of the LCD display module (22), an interior surface of the LCD holder (24) is fitted to an exterior surface of the LCD display module (22), and an exterior surface of the LCD holder (24) is fitted to the interior walls of the side edge frame (11) and the upper surface of the horizontal baffle (12); a side edge of the LCD holder (24) is attached to the interior wall of the side edge frame (11), and a bottom surface of the LCD holder (24) is connected to the upper surface of the horizontal baffle (12) when the screen module (2) is assembled with the intermediate frame structure.

2. The mobile device of claim 1, wherein the LCD holder (24) is connected to the upper surface of the horizontal baffle (12) by means of adhesive, snap or melt connection.

3. The mobile device of claim 1 or 2, wherein the LCD display module (22) forms a corresponding active area (212) on a central region of the bottom surface of the glass panel (21); a left side edge region (213) and a right side edge region (213) are formed between a left rim and a right rim of the active area (212) and a left rim and a right rim of the bottom surface, respectively, and a silk-screen strip in the LCD display module (22) is adhered into the left side edge region (213) and the right side edge region (213).

4. The mobile device of claim 3, wherein portions of the surface of the glass panel (21) corresponding to the left side edge region (213) and the right side edge region (213) have an arced shape, such that the emergent beam from the active area (212) is reflected into the left side edge region (213) and the right side edge region (213).

5. The mobile device of claim 1, wherein the intermediate frame structure (1) is raised to form a surface (112) in the vertical direction, and a slope (113) or camber is formed between a rim of the surface (112) and a top surface exterior rim of the side edge frame (11).

## Patentansprüche

1. Mobilvorrichtung, die Folgendes aufweist:
ein Zwischenrahmengebilde (1) mit einem Seitenrandrahmen (11), der einen Seitenrand der Mobilvorrichtung bildet, wobei das Zwischenrahmengebilde (1) ferner ein horizontales Ablenkelement (12) aufweist, das eine mit einer Innenwand des Seitenrandrahmens (11) verbundenen Einfassung hat; wobei die Mobilvorrichtung ferner Folgendes aufweist:
ein Bildschirmmodul (2) mit Seitenrändern, die bemessen sind, um zur Größe der Innenwände des Seitenrandrahmens (11) zu passen, wobei eine untere Oberfläche des Bildschirmmoduls (2) mit einer oberen Oberfläche des horizontalen Ablenkelements (12) verbunden ist, wenn das Bildschirmmodul (2) mit dem Zwischenrahmengebilde (1) zusammengebaut ist und wobei die Seitenränder des Bildschirmmoduls (2) jeweils an einer entsprechenden Innenwand des Seitenrandrahmens (11) angebracht sind;
wobei das Bildschirmmodul (2) Folgendes aufweist:
eine Glasscheibe (21) mit Seitenrändern, die an den Innenwänden des Seitenwandrahmens (11) angebracht sind, und wobei eine obere Einfassung (211) eines Seitenrands der Glasscheibe (21) mit einer oberen Einfassung (111) einer Innenwand des Seitenrandrahmens (11) verbunden ist;
ein LCD-Anzeigemodul (22), das an die untere Oberfläche der Glasplatte (21) angefügt ist; und
einen LCD-Halter (24), der einen Seitenrand und eine untere Oberfläche des LCD-Anzeigemoduls (22) umschließt, wobei eine Innenfläche des LCD-Halters (24) an einer Außenfläche des LCD-Anzeigemoduls (22) angebracht ist und eine Außenfläche des LCD-Halters (24) an den Innenwänden des Seitenrandrahmens (11) und der oberen Oberfläche des horizontalen Ablenkelements (12) angebracht ist; ein Seitenrand des LCD-Halters (24) an der Innenwand des Seitenrandrahmens (11) angebracht ist und eine untere Oberfläche des LCD-Halters (24) mit der oberen Oberfläche des horizontalen Ablenkelements (12) verbunden ist, wenn das Bildschirmmodul (2) mit dem Zwischenrahmengebilde zusammengebaut ist.

2. Mobilvorrichtung nach Anspruch 1, wobei der LCD-Halter (24) mittels Klebe-, Schnapp- oder Schweißverbindung mit der oberen Oberfläche des horizontalen Ablenkelements (12) verbunden ist.

3. Mobilvorrichtung nach Anspruch 1 oder 2, wobei das LCD-Anzeigemodul (22) einen entsprechenden aktiven Bereich (212) auf einer zentralen Region der unteren Oberfläche der Glasscheibe (21) bildet; eine linke Seitenrandregion (213) und eine rechte Seitenrandregion (214) zwischen einer linken Einfassung und einer rechten Einfassung des aktiven Bereichs (212) bzw. einer linken Einfassung und einer rechten Einfassung der unteren Oberfläche gebildet sind und ein Seiden-Bildschirmstreifen im LCD-Anzeigemodul (22) in die linke Seitenrandregion (213) und die rechte Seitenrandregion (213) eingefügt ist.

4. Mobilvorrichtung nach Anspruch 3, wobei Teile der Oberfläche der Glasscheibe (21), die der linken Seitenwandregion (213) und der rechten Seitenwandregion (213) entsprechen, eine gekrümmte Form haben, so dass der austretende Strahl aus dem aktiven Bereich (212) in die linke Seitenrandregion (213) und die rechte Seitenwandregion (213) hinein reflektiert wird.

5. Mobilvorrichtung nach Anspruch 1, wobei das Zwischenrahmengebilde (1) erhaben ist, um eine Oberfläche (112) in der vertikalen Richtung zu bilden, und zwischen einer Einfassung der Oberfläche (112) und einer Außeneinfassung einer oberen Oberfläche des Seitenrandrahmens (11) eine Schrägung (113) oder Wölbung gebildet ist.

## Revendications

1. Dispositif mobile comprenant :
une structure de cadre intermédiaire (1) ayant un cadre de bord latéral (11) formant un bord latéral du dispositif mobile, la structure de cadre intermédiaire (1) comprenant en outre une cloison horizontale (12) qui a un rebord étant raccordé à une paroi intérieure du cadre de bord latéral (11) ; le dispositif mobile comprenant en outre :
un module d'écran (2) ayant des bords latéraux dimensionnés pour s'adapter à la taille des parois intérieures du cadre de bord latéral (11), une surface inférieure de module d'écran (2) étant raccordée à une surface supérieure de la cloison horizontale (12) lorsque le module d'écran (2) est assemblé avec la structure de cadre intermédiaire (1), et chacun des bords latéraux du module d'écran (2) étant attaché à une paroi intérieure correspondante du cadre de bord latéral (11),
dans lequel le module d'écran (2) comprend :
un panneau en verre (21) ayant des bords latéraux qui sont attachés aux parois intérieures du cadre de bord latéral (11), et un rebord supérieur (211) d'un bord latéral du panneau en verre (21) est raccordé à un rebord supérieur (111) d'une paroi intérieure du cadre de bord latéral (11) ;
un module d'affichage LCD (22) collé à la surface inférieure du panneau en verre (21) ; et
un support de LCD (24) enfermant un bord latéral et une surface inférieure du module d'affichage LCD (22), une surface intérieure du support de LCD (24) est montée à une surface extérieure du module d'affichage LCD (22), et une surface extérieure du support de LCD (24) est montée aux parois intérieures du cadre de bord latéral (11) et à la surface supérieure de la cloison horizontale (12) ; un bord latéral du support de LCD (24) est attaché à la paroi intérieure du cadre de bord latéral (11), et une surface inférieure du support de LCD (24) est raccordée à la surface supérieure de la cloison horizontale (12) lorsque le module d'écran (2) est assemblé avec la structure de cadre intermédiaire.

2. Dispositif mobile selon la revendication 1, dans lequel le support de LCD (24) est raccordé à la surface supérieure de la cloison horizontale (12) au moyen d'un raccord adhésif, à déclic ou par fusion.

3. Dispositif mobile selon la revendication 1 ou 2, dans lequel le module d'affichage LCD (22) forme une zone active correspondante (212) sur une région centrale de la surface inférieure du panneau en verre (21) ; une région de bord latéral gauche (213) et une région de bord latéral droit (213) sont formées entre un rebord gauche et un rebord droit de la zone active (212) et un rebord gauche et un rebord droit de la surface inférieure, respectivement, et une bande sérigraphiée dans le module d'affichage LCD (22) est collée dans la région de bord latéral gauche (213) et dans la région de bord latéral droit (213).

4. Dispositif mobile selon la revendication 3, dans lequel des parties de la surface du panneau en verre (21) correspondant à la région de bord latéral gauche (213) et à la région de bord latéral droit (213) ont une forme arquée, de telle sorte que le faisceau émergent provenant de la zone active (212) est réfléchi dans la région de bord latéral gauche (213) et dans la région de bord latéral droit (213).

5. Dispositif mobile selon la revendication 1, dans lequel la structure de cadre intermédiaire (1) est surélevée pour former une surface (112) dans la direction verticale, et une inclinaison (113) ou une courbure est formée entre un rebord de la surface (112) et un rebord extérieur de la surface supérieure du cadre de bord latéral (11).
